(19) Europäisches Patentamt / European Patent Office / Office européen des brevets

(11) EP 4 269 357 A1

(12) EUROPEAN PATENT APPLICATION
published in accordance with Art. 153(4) EPC

(43) Date of publication:
01.11.2023 Bulletin 2023/44

(51) International Patent Classification (IPC):
C01G 41/02 (2006.01)

(21) Application number: 21910510.3

(52) Cooperative Patent Classification (CPC):
C01G 41/02

(22) Date of filing: 15.12.2021

(86) International application number:
PCT/JP2021/046195

(87) International publication number:
WO 2022/138362 (30.06.2022 Gazette 2022/26)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 25.12.2020 JP 2020216272

(71) Applicant: Nippon Shokubai Co., Ltd.
Osaka-shi, Osaka 541-0043 (JP)

(72) Inventors:
• FUKATA, Yukihiro
  Suita-shi, Osaka 564-0034 (JP)
• AKATSUKA, Takeo
  Kawasaki-shi, Kanagawa 210-0865 (JP)
• KOBAYASHI, Naoki
  Suita-shi, Osaka 564-0034 (JP)

(74) Representative: Müller-Boré & Partner
Patentanwälte PartG mbB
Friedenheimer Brücke 21
80639 München (DE)

(54) TUNGSTIC OXIDE COMPOSITION PRODUCTION METHOD

(57) An object of the present invention is to provide a production method that can obtain a tungsten oxide composition having excellent dispersibility and excellent uniformity for shapes of particles. The present invention is a production method for a tungsten oxide composition, comprising: (1) a reaction step of bringing a tungsten halide and a monohydric alcohol into contact with each other and performing heating at 100°C or higher and 250°C or lower at a temperature-increasing rate of 3.0 °C/min or lower to obtain a composition (I) comprising tungsten oxide and the monohydric alcohol; (2) a step of mixing the composition (I) and one type or two or more types of compounds (A) selected from amines, fatty acids, thiols, and phosphines to obtain a composition (II); and (3) a step of removing at least a part of the monohydric alcohol and a part of the compound (A) from the composition (II) to obtain a composition (III). The present invention preferably further comprises (4) a step of mixing the composition (III) and an organic solvent (C) having a dielectric constant of 10 or lower.

[Fig. 1]

EP 4 269 357 A1

**Description**

TECHNICAL FIELD

The present invention relates to a production method for a tungsten oxide composition. More particularly, the present invention relates to a production method for a composition comprising tungsten oxide nanoparticles and an organic solvent.

BACKGROUND ART

Tungsten oxide, which is used as a near-infrared absorbing material, a photocatalyst, and an electrochromic material, is often applied using a binder such as a thickener or dispersed in a resin or the like to form a film, and thus is desired to have excellent dispersibility. In addition, in order to sufficiently exhibit the catalytic activity and performance of tungsten oxide as a material, tungsten oxide is required to be in the form of nanometer-sized particles having a uniform particle size.

There are three main types of nanoparticle production methods: solid-phase, liquid-phase, and gas-phase methods. In the solid-phase method, nanoparticles are produced by melting a solid, so that it is possible to produce nanoparticles at a high particle concentration and the amount of the obtained nanoparticles is large, but the particle diameter becomes large and aggregation of the nanoparticles easily occurs, so that it is often difficult to control the particle size. In the gas-phase method, nanoparticles are produced through a gas reaction, so that the concentration of the nanoparticles is often low, and the gas-phase method is unsuitable for mass production of nanoparticles. The liquid-phase method has therefore been developed. In the liquid-phase method, the raw materials are dispersed and dissolved in a solvent to prepare a solution, and nanoparticles are produced through a solution reaction, so that it is easy to achieve uniformity in particle diameter by adjusting the concentration and there is an advantage of being able to improve the mass productivity of nanoparticles. In addition, an additive that can improve dispersibility can be easily added, so that it is easy to obtain particles having excellent dispersibility.

An example of a method for synthesizing tungsten oxide fine particles in liquid phase is a method in which tungstic acid or ammonium tungstate is dissolved in hydrogen peroxide and heated to 90°C or higher, ascorbic acid is added, and further heating is performed (Patent Literature 1). The tungsten oxide fine particles obtained by the method described in Patent Literature 1 have good dispersibility, but the particle diameter thereof is large and the obtained particles are also irregularly shaped, so that it is necessary to perform calcination in order to obtain crystal particles.

Similarly, as a method for synthesizing tungsten oxide fine particles in liquid phase, a method, in which tungstic acid is made into a slurry having a pH of less than 7 in water and this slurry is hydrothermally reacted under a condition of 200°C or higher, is known (Patent Literature 2). The tungsten oxide fine particles obtained by the method described in Patent Literature 2 can be obtained as monoclinic crystal particles having an average particle diameter of 50 to 200 nm, but there is a problem in reducing the particle size; for example, crystal particles cannot be obtained when the pH is increased in order to further decrease the particle diameter. Furthermore, since hydrothermal synthesis is performed in a crystallization reaction, high-temperature treatment at 200°C to 300°C under a pressurized condition is essential, and it is necessary to use a device such as an autoclave, so that there is a problem that scale-up is difficult.

CITATION LIST

PATENT LITERATURE

Patent literature 1: JPA2004-131346
Patent literature 2: JPA2010-280551

SUMMARY OF THE INVENTION

PROBLEMS TO BE SOLVED BY THE INVENTION

The present invention has been made in view of the above-described circumstances, and an object of the present invention is to provide a production method that can obtain a tungsten oxide composition having excellent dispersibility.

SOLUTION TO THE PROBLEMS

The present inventors have studied variously to achieve the object and have arrived at the present invention.

The production method [1] for a tungsten oxide composition of the present invention is characterized in that comprising:

(1) a reaction step of bringing a tungsten halide and a monohydric alcohol into contact with each other and performing heating at 100°C or higher and 250°C or lower to obtain a composition (I) comprising tungsten oxide and the monohydric alcohol;

(2) a step of mixing the composition (I) and one type or two or more types of compounds (A) selected from amines, fatty acids, thiols, and phosphines to obtain a composition (II); and

(3) a step of removing at least a part of the monohydric alcohol and a part of the compound (A) from the composition (II) to obtain a composition (III).

The preferred modes of the present invention are [2] to [7] below.

[2] The production method according to [1], wherein the heating to 100°C or higher and 250°C or lower is performed at a temperature-increasing rate of 3.0°C/min or lower.

[3] The production method according to [1] or [2], further comprising (4) a step of mixing the composition (III) and an organic solvent (C) having a dielectric constant of 10 or lower to obtain a composition (IV).

[4] The production method according to any one of [1] to [3], wherein the monohydric alcohol is a monohydric alcohol having 6 to 20 carbon atoms.

[5] The production method according to any one of [1] to [4], wherein the compound (A) comprises an amine compound having 6 to 20 carbon atoms.

[6] The production method according to any one of [1] to [5], wherein a crystallite diameter of the tungsten oxide calculated by XRD measurement is 1 to 30 nm.

[7] The production method according to any one of [3] to [6], wherein a content amount of the tungsten oxide in the composition (IV) is 10% by mass to 50% by mass.

EFFECT OF THE INVENTION

The production method of the present invention can produce a tungsten oxide composition having good dispersibility to be produced at a low cost under milder reaction conditions than those in the conventional art.

BRIEF DESCRIPTION OF DRAWINGS

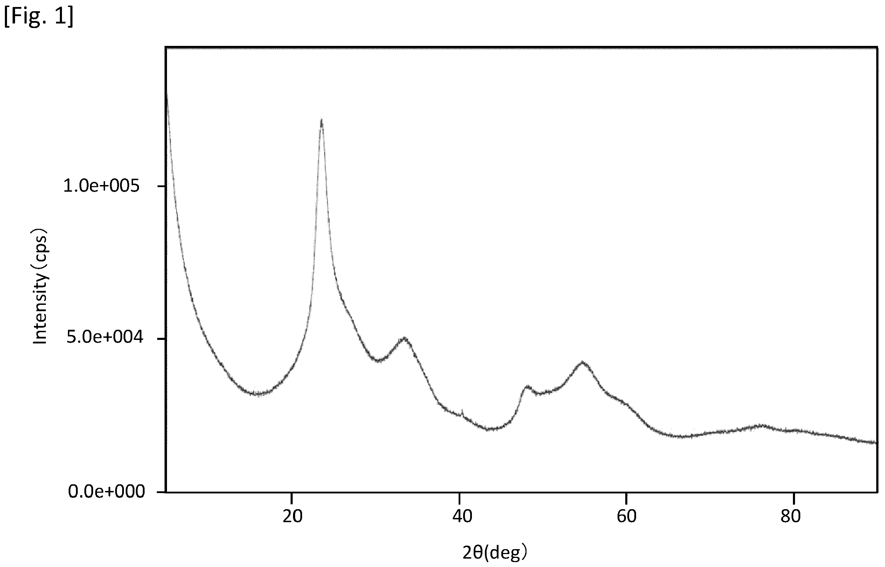

Figure 1 illustrates an XRD spectrum of a tungsten oxide composition (III) obtained in Example 1.

DESCRIPTION OF EMBODIMENTS

Hereinafter, the present invention will be described in detail.

A combination of two or more of individual preferred embodiments of the present invention described below is also a preferred embodiment of the present invention.

[Production method for tungsten oxide composition of the present invention]

The production method of the present invention indispensably comprises the following steps (1) to (3), and preferably further comprises the following step (4):

(1) a reaction step of bringing a tungsten halide and a monohydric alcohol into contact with each other and performing heating at 100°C or higher and 250°C or lower to obtain a composition (I) comprising tungsten oxide and the monohydric alcohol;

(2) a step of mixing the composition (I) and one type or two or more types of compounds (A) selected from amines, fatty acids, thiols, and phosphines to obtain a composition (II);

(3) a step of removing at least a part of the monohydric alcohol and a part of the compound (A) from the composition (II) to obtain a composition (III); and

(4) a step of mixing the composition (III) and an organic solvent (C) having a dielectric constant of 10 or lower.

<Step (1)>

The step (1) of the present invention is a reaction step of bringing a tungsten halide and a monohydric alcohol into contact with each other and performing heating at 100°C or higher and 250°C or lower (hereinafter, referred to as temperature range T) to obtain a composition (I) comprising tungsten oxide and the monohydric alcohol. In the step (1), the heating is preferably performed to the range of 100°C or higher and 250°C or lower at a temperature-increasing rate of 3.0°C/min or lower. In the heating in the temperature range T, the temperature may be maintained constant or changed in the temperature range T.

Specific modes of the step (1) include a mode (i) in which the tungsten halide is heated in the monohydric alcohol in the temperature range T to obtain the composition (I) comprising tungsten oxide and the monohydric alcohol.

In the step (1), after an alkoxide is generated from the tungsten halide and the monohydric alcohol, a reaction may be carried out in the monohydric alcohol at 100°C or higher and 250°C or lower. This may be realized by the above mode (i) or a mode (ii) in which the tungsten halide is heated in the monohydric alcohol at a temperature $T_A$ in the temperature range T, then cooled once, and heated again at a temperature $T_B$ higher than $T_A$ in the temperature range T to obtain the composition (I) comprising tungsten oxide and the monohydric alcohol, and such a mode (ii) is also included in the step (1) of the present invention. In both above modes (i) and (ii), the temperature-increasing rate to the temperature range T is preferably 3.0°C/min or lower. In the mode (ii), the temperature-increasing rate in both of temperature increase to the temperature $T_A$ and temperature increase to the temperature $T_B$ is preferably 3.0°C/min or lower.

The reaction time (total time of heating in the temperature range T) is 0.1 to 24 hours, preferably 1 to 20 hours, more preferably 1 to 12 hours, and further preferably 2 to 6 hours.

The step (1) may be performed under normal pressure, pressurized conditions, or reduced pressure, but is preferably performed under normal pressure.

The step (1) may be performed while adding inert gas.

Examples of the tungsten halide used in the step (1) include tungsten hexafluoride, tungsten tetrachloride, tungsten hexachloride, tungsten pentabromide, and the like. From the viewpoint of improving the yield of tungsten oxide, tungsten hexachloride is preferably used.

Examples of the monohydric alcohol used in the step (1) include monohydric alcohols having 1 to 20 carbon atoms, and specific examples thereof include aliphatic alcohols such as methanol, ethanol, 1-propanol, 2-propanol, 1-butanol, 2-butanol, 1-pentanol, 2-pentanol, neopentyl alcohol, 1-hexanol, 1-heptanol, 1-octanol, 2-ethylhexanol, 1-decanol, 1-dodecanol (lauryl alcohol), stearyl alcohol, and oleyl alcohol. That is, monohydric aliphatic alcohols having 1 to 20 carbon atoms are preferable. The number of carbon atoms of the monohydric alcohol is preferably 6 or more and more preferably 8 or more, and the upper limit of the number of carbon atoms is preferably 20 or less, since the yield of tungsten oxide tends to be improved further. Among the above monohydric alcohols, a primary alcohol is more preferably used since decomposition and the like of the alcohol solvent itself are less likely to occur and the yield of tungsten oxide tends to be improved further. Furthermore, in order to avoid polymerization of the solvent itself, a primary alcohol other than benzyl alcohol is more preferably used. The monohydric alcohol is preferably a monohydric primary aliphatic alcohol having 1 to 20 carbon atoms, and more preferably a monohydric primary aliphatic alcohol having 6 to 20 carbon atoms. Two or more of the above monohydric alcohols may be used, and in the case of using two or more of the monohydric alcohols, one or more of the monohydric alcohols are preferably monohydric alcohols having 6 or more carbon atoms, monohydric alcohols having 8 or more carbon atoms are more preferably used, and the upper limit of the number of carbon atoms is, for example, preferably 20 or less.

Also, an alcohol having a boiling point of 150°C or higher is preferably used since the yield of tungsten oxide tends to be improved further. The upper limit of the boiling point is preferably 400°C or lower and more preferably 370°C or lower. In addition, an alcohol that can dissolve the used tungsten halide is preferably used.

In the step (1), when the tungsten halide and the monohydric alcohol are brought into contact with each other, another solvent other than the monohydric alcohol may be contained as long as the used tungsten halide can be dissolved. The amount of the monohydric alcohol with respect to 100% by mass of the total amount of the monohydric alcohol and the solvent other than the monohydric alcohol is, for example, 90% by mass or more, preferably 95% by mass or more, and more preferably 98% by mass or more, and may be 100% by mass.

In the step (1), the reaction is carried out in the monohydric alcohol in the temperature range T of 100°C or higher and 250°C or lower. The temperature range T is preferably 120°C or higher, more preferably 150°C or higher, and further preferably 170°C or higher. In addition, the temperature range T is preferably 240°C or lower, more preferably 220°C or lower, further preferably 200°C or lower, and particularly preferably 190°C or lower. The temperature range T is most preferably 120°C or higher and 190°C or lower.

In the step (1), in increasing the temperature to the temperature range T, the temperature-increasing rate is preferably 3.0°C/min or lower, more preferably 2.0°C/min or lower, and further preferably 1.0°C/min or lower. The lower limit of the temperature-increasing rate is not particularly limited, but the temperature-increasing rate is preferably 0.01°C/min or more, more preferably 0.05°C/min or more, and further preferably 0.1°C/min or more. If the temperature-increasing rate is excessively low, the reaction time may become long, resulting in poor productivity.

In the step (1), the use amount of the alcohol is not limited, but the use amount of the alcohol per mole of the tungsten halide is preferably 6 moles or more and more preferably 8 moles or more. In addition, the use amount of the alcohol per mole of the tungsten halide is preferably 35 moles or less, more preferably 30 moles or less, further preferably 25 moles or less, and even further preferably 20 moles or less.

The step (1) may be performed in the presence of a component (hereinafter, other component) which is other than the following components, the tungsten halide, the monohydric alcohol, and the above-described other solvent (solvent other than the monohydric alcohol). Examples of other component include carboxylic acid derivatives and the like. The amount of other component per 100 parts by mass of the total amount of the tungsten halide, the monohydric alcohol, and the other solvent is preferably 5 parts by mass or less and more preferably 3 parts by mass or less, and may be 0 parts by mass.

The amount of the monohydric alcohol in 100% by mass of a mixture comprising at least the tungsten halide and the monohydric alcohol and subjected to heating in the temperature range T is preferably 70% by mass or more, more preferably 80% by mass or more, and further preferably 85% by mass or more.

The step (1) is preferably performed such that the solid content (% by mass) of the obtained composition comprising tungsten oxide and the monohydric alcohol (hereinafter, referred to as composition (I)) is 2% or more and 50% or less, and is more preferably performed such that the solid content is 5% or more and 40% or less. The solid content can be calculated from TG-DTA measurement described later.

<Step (2)>

The step (2) of the present invention is a step of mixing the composition (I) and one type or two or more types of compounds (A) selected from amines, fatty acids, thiols, and phosphines to obtain a composition (II). The step (2) may be performed by adding the compound(s) (A) to the composition (I).

As amine compounds, primary amines are preferable, examples of the primary amines include aliphatic amine compounds having 6 to 20 carbon atoms, and specific examples of the primary amines include 1-hexylamine, 1-octylamine, 2-ethylhexylamine, 1-decylamine (1-aminodecane), 1-dodecylamine, stearylamine, oleylamine, and the like. An amine compound having 8 or more carbon atoms is more preferably used, and an amine compound having 12 or more carbon atoms is further preferably used, since the stability of the tungsten oxide composition tends to be improved further. Also, an amine compound having 25 or less carbon atoms may be used, and an amine compound having 20 or less carbon atoms may be used.

As fatty acids, fatty acids having 4 to 30 carbon atoms are preferable, a fatty acid having 6 to 24 carbon atoms is more preferable, and a fatty acid having 8 to 20 carbon atoms is further preferable. Specific examples thereof include butyric acid, valeric acid, caproic acid, octanoic acid, decanoic acid, lauric acid, palmitic acid, stearic acid, oleic acid, linoleic acid, arachidonic acid, and the like.

Thiol compounds are not limited as long as the thiol compounds are compounds having an SH group, and a thiol compound having 4 to 30 carbon atoms is preferable, and a thiol compound having 8 to 24 carbon atoms is more preferable. Specific examples thereof include 1-butanethiol, 1-pentanethiol, 1-hexanethiol, 1-octanethiol, 2-ethyl-1-hexanethiol, 1-decanethiol, 1-dodecanethiol, 1-octadecanethiol, and the like.

Phosphine compounds (or simply referred to as phosphines) are $PH_3$ or compounds obtained by substituting a hydrogen of $PH_3$ with an alkyl group or an aryl group, and are not particularly limited, and specific examples thereof include: trialkylphosphines such as tri-n-butylphosphine, tri-n-octylphosphine, and tricyclohexylphosphine; and triarylphosphines such as triphenylphosphine, tri-o-tolylphosphine, tri-m-tolylphosphine, tri-p-tolylphosphine, and tris(p-methoxyphenyl)phosphine.

In the step (2), in the case of using two or more compounds (A), the compounds (A) may be a combination of the same type of compounds or a combination of different types of compounds.

In the step (2), the use amount of the compound(s) (A) per mole of the use amount of the tungsten halide in the step (1) is preferably 0.2 moles or more and 10 moles or less, more preferably 0.5 moles or more and 8 moles or less, and further preferably 1 mole or more and 5 moles or less. The use amount of the compound(s) (A) per mole of the existing amount of tungsten oxide in the step (2) may be in the above range.

In the step (2), in order to improve the dispersibility of tungsten oxide, another compound (B) may be used in combination. Examples of another compound (B) include surfactants, aliphatic hydrocarbon compounds, and the like. The use amount of another compound (B) is not particularly limited, but is 0 to 20 moles per mole of the use amount of the tungsten halide.

The temperature of the composition (I) when the composition (I) is mixed with the compound(s) (A) is, for example, preferably 20 to 120°C, more preferably 40 to 100°C, and further preferably 60 to 90°C.

<Step (3)>

The step (3) of the present invention is a step of removing at least a part of the monohydric alcohol and a part of the compound (A) from the composition (II) to obtain a composition (III). In the step (3), the monohydric alcohol and the compound (A) that are not physically or chemically bonded to tungsten oxide are preferably removed as much as possible. Furthermore, in the step (3), halogen compounds produced as byproducts such as hydrogen chloride are preferably removed.

In the step (3), the method for removing at least a part of the monohydric alcohol and a part of the compound (A) is not particularly limited, examples thereof include a method in which the monohydric alcohol and the compound (A) are removed by distillation, and a method in which solid-liquid separation is performed by filtration, decantation, and the like, and a plurality of methods may be used.

In the step (3), the distillation may be carried out under normal or reduced pressure.

In the step (3), in the method in which solid-liquid separation is performed by filtration, decantation, and the like, tungsten oxide in the composition (II) may be aggregated by using an aggregation agent. A monohydric alcohol having 1 to 4 carbon atoms is preferable as the aggregation agent.

In the step (3), in the method in which solid-liquid separation is performed by filtration, decantation, and the like, a dispersion medium may be used for aggregation using the aggregation agent. Aggregated tungsten oxide particles can be dispersed in the solvent by using the dispersion medium. Examples of the dispersion medium include aliphatic hydrocarbons having 5 to 10 carbon atoms.

In the step (3), centrifugation is preferably performed for solid-liquid separation. The centrifugal acceleration is not limited, but is preferably 100 G or more, more preferably 500 G or more, and further preferably 1000 G or more. In addition, the centrifugal acceleration may be 4500 G or lower. In particular, by performing centrifugation after tungsten oxide is aggregated, the composition (III) can be efficiently obtained as a result of solid-liquid separation by decantation or filtration.

The content amount of tungsten oxide after drying in the composition (III) obtained in the step (3) is preferably 50% by mass or more and 90% by mass or less.

The ratio of an actually obtained mass of tungsten oxide to a theoretical mass value of tungsten oxide calculated from the tungsten amount of the tungsten halide used in the step (1), that is, the yield, is, for example, 65% or more, preferably 70% or more, more preferably 75% or more, and further preferably 80% or more, and the upper limit thereof is most preferably 100% by mass, but the upper limit may be about 95% or may be about 90%.

<Step (4)>

The step (4) in the preferred embodiment of the present invention is a step of mixing the composition (III) and an organic solvent (C) having a dielectric constant of 10 or lower. The organic solvent (C) used in the step (4) may be any organic solvent as long as the organic solvent has a dielectric constant of 10 or lower, and an organic solvent having a dielectric constant of 5 or lower is more preferable. A nonpolar organic solvent having 5 to 9 carbon atoms is further preferable, and specific examples thereof include pentane, hexane, cyclohexane, heptane, octane, benzene, toluene, xylene, mesitylene, ethylbenzene, and the like. Only one of these organic solvents (C) may be used, or two or more of these organic solvents (C) may be used in combination. By using the organic solvent (C) having a dielectric constant of 10 or lower, a tungsten oxide composition (IV) with excellent dispersion stability of the tungsten oxide composition (III) can be made. Dispersion here refers to a state where no particles are generated as precipitation even after the dispersion solution is allowed to stand for several days, for example, 1 week.

As the mixing means in the step (4), any conventionally known mixing means may be employed as appropriate. Examples thereof include mechanical mixing using a mixing machine such as a stirrer or a static mixer, and mixing by vibration using ultrasonic waves, a shaker, and the like.

<Other steps>

The production method of the present invention may optionally comprise a step other than the above steps (1) to (4). Examples of such a step include a devolatilization step, a drying step, and the like, and such a step may be performed a plurality of times.

Each step in the production method of the present invention may be performed independently in batch treatment or in continuous treatment.

[Tungsten oxide composition (IV) of the present invention]

The content amount of tungsten oxide in the tungsten oxide composition (IV) dispersion liquid obtained by the production method of the present invention is preferably 1% by mass to 50% by mass, more preferably 5% by mass or more, further preferably 10% by mass or more, and particularly preferably 15% by mass or more. In addition, the upper limit thereof is more preferably 45% by mass or less and further preferably 40% by mass or less.

The tungsten oxide composition (IV) dispersion liquid obtained by the production method of the present invention comprises the above compound (A) in an amount of preferably 1% by mass or more, more preferably 2% by mass or more, and further preferably 5% by mass or more. In addition, the upper limit of the amount of the compound (A) is 20% by mass or less, more preferably 16% by mass or less, and further preferably 12% by mass or less. An example of the compound (A) is one type, or two or more types of compounds (A) selected from the amines, the fatty acids, the thiols, and the phosphines described above in the step (2). Specific examples thereof include aliphatic amine compounds (particularly, primary amines) having 6 to 20 carbon atoms, fatty acids having 4 to 30 carbon atoms, thiol compounds having 4 to 30 carbon atoms and preferably 8 to 24 carbon atoms, trialkylphosphines, triarylphosphines, and the like.

The amount of organic matter in 100% by mass of the composition (III) or the amount of organic matter in 100% by mass of tungsten oxide after drying in the composition (IV) is preferably 15% by mass or more, more preferably 20% by mass or more, and further preferably 25% by mass or more, and may be 45% by mass or less, or may be 40% by mass or less.

The amount of the organic solvent (C) having a dielectric constant of 10 or lower in the tungsten oxide composition (IV) dispersion liquid obtained by the production method of the present invention is preferably 40% by mass to 89% by mass. An example of the organic solvent (C) having a dielectric constant of 10 or lower is the above-described organic solvent (C) in the step (4), and is preferably a nonpolar organic solvent having 5 to 9 carbon atoms, and specific examples thereof include pentane, hexane, cyclohexane, heptane, octane, benzene, toluene, xylene, mesitylene, ethylbenzene, and the like.

The moisture content of the tungsten oxide composition (IV) dispersion liquid obtained by the production method of the present invention is preferably 10 ppm to 10000 ppm and more preferably 100 ppm to 5000 ppm.

The content amount of halogen atoms in the tungsten oxide composition (IV) dispersion liquid obtained by the production method of the present invention is preferably 10000 ppm or less, more preferably 5000 ppm or less, and further preferably 3000 ppm or less. The lower limit thereof is not particularly limited, but the content amount of halogen atoms is preferably 0.1 ppm or more and more preferably 1 ppm or more.

The tungsten oxide obtained by the production method of the present invention is preferably a cubic crystal. The crystallite diameter, of the tungsten oxide nanoparticles obtained by the production method of the present invention, by XRD measurement is preferably 1 to 30 nm and more preferably 2 nm to 10 nm. The crystallite diameter may be calculated from the half width of a peak having the highest peak intensity among peaks observed in the XRD measurement.

This application claims the benefit of priority based on the Japanese Patent Applicationi No. 2020-216272 filed on December 25, 2020. The entire contents of the Japanese Patent Applicationi No. 2020-216272 filed on December 25, 2020, are incorporated herein by reference.

EXAMPLES

The present invention will be described below in more detail by means of examples, but the present invention is not limited to these examples. Unless otherwise specified, "part(s)" refers to "part(s) by mass", and "%" refers to "% by mass".

[TG-DTA measurement]

For tungsten oxide nanoparticles obtained in each example, the amount of organic matter was obtained as follows.

Specifically, oxide nanoparticles were used as a measurement sample, and a thermogravimetric curve was measured in an air atmosphere in a temperature range from room temperature (25°C) to 600°C at a temperature-increasing rate of 10°C/min, using a thermogravimetric device (thermogravimetric analyzer, manufactured by Bruker AXS Gmbh, trade name "TG DTA 2020 SA") as a measurement device. From the thermogravimetric curve, the weight fraction at 50°C (W1: residual weight fraction at 50°C, unit: % by mass) and the weight fraction at 600°C (W2: residual weight fraction at 600°C, unit: % by mass) were obtained, and the amount of organic matter (% by mass) in each measurement sample was obtained on the basis of the following calculation expression (1):

$$[\text{Amount of organic matter}] = (W1 - W2)/W1 \quad (1).$$

[XRF measurement]

A solution was prepared by adding toluene to a tungsten oxide composition dispersion liquid obtained in each example such that tungsten oxide nanoparticles were contained in an amount of 0.1 to 1% by mass, and measurement was performed using an X-ray fluorescence analyzer (model "ZSX Primus", manufactured by Rigaku Corporation) to measure the content amount of chlorine atoms contained in the solution. Quantification was performed by an absolute calibration curve method, using a calibration curve prepared separately using a calibration curve solution obtained by dissolving chlorobenzene in toluene.

[XRD measurement]

XRD measurement was performed using a fully automated multipurpose X-ray diffractometer (SMART LAB, manufactured by Rigaku Corporation) under the following conditions.

$CuK\alpha1$ rays: 0.15406 nm
Scanning range: 5° to 90°
X-ray output setting: 45 kV-200 mA
Step size: 0.020°

In addition, crystal qualitative analysis and crystallite diameter calculation were performed using analysis software PDXL2.

[Moisture content measurement]

For the moisture content of the tungsten oxide composition dispersion liquid, the water content in the dispersion solution of the tungsten oxide nanoparticles was measured using Karl Fischer volumetric titration type automatic moisture analyzer Model AVQ-2200A (manufactured by HIRANUMA Co., Ltd.). AQUAMICRON SS-Z (manufactured by Mitsubishi Chemical Corporation) in an amount of 3 mg was used as a titrant, and a titer test of the titrant was performed using deionized water. The measurement was performed using 50 mL of AQUAMICRON dehydrating solvent GEX (manufactured by Mitsubishi Chemical Corporation) in which 10 g of salicylic acid was dissolved, as a solvent.

[Example 1]

In a 1-L glass reactor equipped with a stirrer, a thermometer, a cooling tube, a gas washing bottle, and a vacuum pump, 60 g of tungsten hexachloride (manufactured by TANIOBIS Japan Co., Ltd.) was dissolved in 600 g of oleyl alcohol (manufactured by Wako Pure Chemical Industries, Ltd., special grade reagent) in nitrogen gas. The pressure of this solution was reduced to distill off low-boiling components and devolatilize the solution, and then the pressure of the solution was returned to the original pressure using nitrogen. Then, the temperature of the solution was increased to 200°C at a temperature-increasing rate of 1.0°C/min and maintained for 3 hours to obtain 610 g of a 4.8 wt% tungsten oxide-oleyl alcohol solution.
The above-described solution in an amount of 610 g was heated to 80°C, and 30.0 g of 1-aminodecane and 35.0 g of trioctylphosphine were added to perform ligand exchange.
Settling particles were generated by causing hexane to act as a dispersion medium and methanol to act as an aggregation agent with respect to the above-described solution. Then, a purification operation of performing centrifugation at 3900 G for 3 minutes was repeated three times to remove the component that was not chemically or physically bonded to the generated particles. The supernatant was removed, and the settling particles were collected and vacuum-dried at 70°C for 1 hour to obtain 45.9 g of tungsten oxide nanoparticles. The amount of organic matter calculated from the reduced weight when heated to 600°C by TG-DTA measurement was 35% by mass. The yield based on tungsten hexachloride was 85%.
The above-described tungsten oxide nanoparticles in an amount of 45.9 g were dispersed in 45.0 g of hexane to obtain a composition dispersion liquid having a particle concentration of 32.8% by mass on a tungsten oxide basis.
The moisture content of the composition dispersion liquid obtained by the Karl Fischer method was 990 ppm.
The content amount of chlorine atoms by XRF measurement was 1494 ppm.
The crystallite diameter calculated from the half width at a diffraction angle of 23.6° in XRD measurement was 8.6 nm.

[Example 2]

In a 1-L glass reactor equipped with a stirrer, a thermometer, a cooling tube, a gas flow meter, and a gas washing bottle, 60 g of tungsten hexachloride (manufactured by TANIOBIS Japan Co., Ltd.) was dissolved in 400 g of 1-octanol (manufactured by Wako Pure Chemical Industries, Ltd., special grade reagent) in nitrogen gas. The temperature of this solution was increased to 180°C at a temperature-increasing rate of 0.3°C/min and maintained for 1 hour to obtain 409 g of a 7.6 wt% tungsten oxide-1-octanol solution.

The above-described solution in an amount of 409 g was heated to 80°C, and 25.0 g of oleylamine and 40.0 g of oleic acid were added to perform ligand exchange.

Settling particles were generated by causing heptane to act as a dispersion medium and ethanol to act as an aggregation agent with respect to the above-described solution. Then, a purification operation of performing centrifugation at 3900 G for 3 minutes was repeated three times to remove the component that was not chemically or physically bonded to the generated particles. The supernatant was removed, and the settling particles were collected and vacuum-dried at 70°C for 1 hour to obtain 46.6 g of tungsten oxide nanoparticles. The amount of organic matter calculated from the reduced weight when heated to 600°C by TG-DTA measurement was 33% by mass. The yield based on tungsten hexachloride was 89%.

The above-described tungsten oxide nanoparticles in an amount of 46.6 g were dispersed in 90.0 g of xylene to obtain a composition dispersion liquid having a particle concentration of 22.9% by mass on a tungsten oxide basis.

The moisture content of the composition dispersion liquid obtained by the Karl Fischer method was 3700 ppm.

The content amount of chlorine atoms by XRF measurement was 93 ppm.

The crystallite diameter calculated from the half width at a diffraction angle of 23.8° in XRD measurement was 3.36 nm.

[Example 3]

In a 500-mL glass reactor equipped with a stirrer, a thermometer, a cooling tube, a gas flow meter, and a gas washing bottle, 44 g of tungsten hexachloride (manufactured by TANIOBIS Japan Co., Ltd.) was dissolved in 300 g of 1-hexanol (manufactured by Wako Pure Chemical Industries, Ltd., special grade reagent) in nitrogen gas. The temperature of this solution was increased to 150°C at a temperature-increasing rate of 1.5°C/min and maintained for 30 minutes to obtain 304 g of a 6.6 wt% tungsten oxide-1-hexanol solution.

The above-described solution in an amount of 304 g was heated to 80°C, and 25.0 g of 1-octylamine and 30.0 g of dodecanethiol were added to perform ligand exchange.

Settling particles were generated by causing hexane to act as a dispersion medium and isopropyl alcohol to act as an aggregation agent with respect to the above-described solution. Then, a purification operation of performing centrifugation at 1300 G for 3 minutes was repeated three times to remove the component that was not chemically or physically bonded to the generated particles. The supernatant was removed, and the settling particles were collected and vacuum-dried at 70°C for 1 hour to obtain 32.9 g of tungsten oxide nanoparticles. The amount of organic matter calculated from the reduced weight when heated to 600°C by TG-DTA measurement was 39% by mass. The yield based on tungsten hexachloride was 78%.

The above-described tungsten oxide nanoparticles in an amount of 32.9 g were dispersed in 40.0 g of xylene to obtain a composition dispersion liquid having a particle concentration of 27.5% by mass on a tungsten oxide basis.

The moisture content of the composition dispersion liquid obtained by the Karl Fischer method was 8376 ppm.

The content amount of chlorine atoms by XRF measurement was 3306 ppm.

The crystallite diameter calculated from the half width at a diffraction angle of 24.0° in XRD measurement was 3.35 nm.

[Example 4]

In a 500-mL glass reactor equipped with a stirrer, a thermometer, a cooling tube, a gas flow meter, and a gas washing bottle, 51 g of tungsten hexachloride (manufactured by TANIOBIS Japan Co., Ltd.) was dissolved in 400 g of 2-ethylhexanol (manufactured by Wako Pure Chemical Industries, Ltd., special grade reagent) in nitrogen gas. The temperature of this solution was increased to 150°C at a temperature-increasing rate of 2.5°C/min and maintained for 3 hours to obtain 407 g of a 6.4 wt% tungsten oxide-2-ethylhexanol solution.

The above-described solution in an amount of 407 g was heated to 80°C, and 25.0 g of 1-aminodecane and 25.0 g of lauric acid were added to perform ligand exchange.

Settling particles were generated by causing hexane to act as a dispersion medium and methanol to act as an aggregation agent with respect to the above-described solution. Then, a purification operation of performing centrifugation at 1300 G for 3 minutes was repeated three times to remove the component that was not chemically or physically bonded to the generated particles. The supernatant was removed, and the settling particles were collected and vacuum-dried at 70°C for 1 hour to obtain 35.0 g of tungsten oxide nanoparticles. The amount of organic matter calculated from the reduced weight when heated to 600°C by TG-DTA measurement was 26% by mass. The yield based on tungsten hexachloride was 87%.

The above-described tungsten oxide nanoparticles in an amount of 35.0 g were dispersed in 35.0 g of xylene to obtain a composition dispersion liquid having a particle concentration of 37.0% by mass on a tungsten oxide basis.

The moisture content of the composition dispersion liquid obtained by the Karl Fischer method was 7601 ppm.

The content amount of chlorine atoms by XRF measurement was 989 ppm.

The crystallite diameter calculated from the half width at a diffraction angle of 24.0° in XRD measurement was 3.89 nm.

[Example 5]

In a 300-mL glass reactor equipped with a stirrer, a thermometer, a cooling tube, a gas flow meter, and a gas washing bottle, 14 g of tungsten hexachloride (manufactured by TANIOBIS Japan Co., Ltd.) was dissolved in 30 g of 1-hexanol (Wako Pure Chemical Industries, Ltd., special grade reagent) in nitrogen gas. This solution was heated to 100°C at a temperature-increasing rate of 1.5°C/min under reduced pressure, and then low-boiling components were distilled off and the solution was devolatilized. The solution was cooled to room temperature, and then the pressure of the solution was returned to the original pressure using nitrogen, to obtain a solution comprising a tungsten alkoxide compound. To this solution, 140 g of lauryl alcohol was added, and the temperature of the solution was increased to 200°C at a temperature-increasing rate of 1.5°C/min and maintained for 1 hour to obtain 165 g of a solution comprising 4.0 wt% of tungsten oxide.

The above-described solution in an amount of 165 g was heated to 80°C, and 10.0 g of oleylamine and 10.0 g of oleic acid were added to perform ligand exchange.

Settling particles were generated by causing hexane to act as a dispersion medium and methanol to act as an aggregation agent with respect to the above-described solution. Then, a purification operation of performing centrifugation at 1300 G for 3 minutes was repeated three times to remove the component that was not chemically or physically bonded to the generated particles. The supernatant was removed, and the settling particles were collected and vacuum-dried at 70°C for 1 hour to obtain 9.0 g of tungsten oxide nanoparticles. The amount of organic matter calculated from the reduced weight when heated to 600°C by TG-DTA measurement was 27% by mass. The yield based on tungsten hexachloride was 80%.

The above-described nanoparticles in an amount of 9.0 g were dispersed in 20.0 g of xylene to obtain a composition dispersion liquid having a particle concentration of 22.6% by mass on a tungsten oxide basis.

The moisture content of the composition in the dispersion liquid obtained by the Karl Fischer method was 8376 ppm.

The content amount of chlorine atoms by XRF measurement was 168 ppm.

The crystallite diameter calculated from the half width at a diffraction angle of 23.8° in XRD measurement was 4.13 nm.

[Example 6]

In a 1-L glass reactor equipped with a stirrer, a thermometer, a cooling tube, a gas flow meter, and a gas washing bottle, 40 g of tungsten hexachloride (manufactured by TANIOBIS Japan Co., Ltd.) was dissolved in 400 g of 1-octanol (manufactured by Wako Pure Chemical Industries, Ltd., special grade reagent) in nitrogen gas. The pressure of this solution was reduced to distill off low-boiling components and devolatilize the solution, and then the temperature of the solution was increased to 120°C at a temperature-increasing rate of 0.3°C/min and maintained for 16 hours to obtain 425 g of a 5.5 wt% tungsten oxide-1-octanol solution. The above-described solution in an amount of 425 g was heated to 80°C, and 10.0 g of oleylamine and 10.0 g of oleic acid were added to perform ligand exchange.

A decantation operation of causing heptane to act as a dispersion medium and methanol to act as an aggregation agent with respect to the above-described solution to aggregate nanoparticles, then allowing the solution to stand to settle the aggregated nanoparticles, and removing the supernatant clear solution, was repeated on the solution comprising the above-described synthesized particles until the content of the component that was not chemically or physically bonded to the synthesized particles became 5% by mass or lower. To the obtained slurry, 50 g of xylene was added, and the slurry was concentrated under conditions of 5 kPa and 90°C to distill off heptane and methanol and then 75 g of a dispersion liquid of tungsten oxide in xylene was obtained. The organic ligand amount calculated from the reduced weight when heated to 600°C by TG analysis of the dispersion liquid was 25% by mass, and the particle concentration of the tungsten oxide nanoparticle dispersion liquid and the yield based on tungsten chloride were 27.1% by mass and 65%, respectively.

The moisture content of the composition dispersion liquid obtained by the Karl Fischer method was 7010 ppm.

The content amount of chlorine atoms by XRF measurement was 49 ppm.

The crystallite diameter calculated from the half width at a diffraction angle of 24.0° in XRD measurement was 4.83 nm.

[Example 7]

In a 1-L glass reactor equipped with a stirrer, a thermometer, a cooling tube, a gas flow meter, and a gas washing bottle, 48 g of tungsten hexachloride (manufactured by TANIOBIS Japan Co., Ltd.) was dissolved in 500 g of 1-octanol (manufactured by Wako Pure Chemical Industries, Ltd., special grade reagent) in nitrogen gas. The pressure of this solution was reduced to distill off low-boiling components and devolatilize the solution, and then the temperature of the solution was increased to 100°C at a temperature-increasing rate of 1.0°C/min and maintained for 20 hours to obtain 531 g of 5.3 wt% tungsten oxide-1-octanol solution. The above-described solution in an amount of 531 g was heated to 80°C, and 15.0 g of oleylamine and 10.0 g of oleic acid were added to perform ligand exchange.

Heptane was caused to act as a dispersion medium and a 50:50 (v/v) solution of methanol and ethanol was caused to act as an aggregation agent with respect to the above-described solution to aggregate nanoparticles, and then the obtained suspension was filtered by suction through a funnel having a diameter of 6.0 cm (manufactured by Kiriyama Glass Works Co.) and having filter paper (No. 5A, manufactured by Kiriyama Glass Works Co.) put thereon, to remove the component that was not chemically or physically bonded. The particles were washed three times by putting 20 g of ethanol over the particles, then collected, and vacuum-dried at 70°C for 1 hour to obtain 31.5 g of tungsten oxide nanoparticles having an organic ligand amount of 26% by mass calculated from the reduced weight when heated to 600°C by TG analysis (yield based on tungsten chloride: 83%). The above-described tungsten oxide nanoparticles in an amount of 31.5 g were dispersed in 140 g of xylene to obtain a dispersion liquid having a particle concentration of 18.5% by mass on a tungsten oxide basis.

The moisture content of the composition dispersion liquid obtained by the Karl Fischer method was 8960 ppm.

The content amount of chlorine atoms by XRF measurement was 394 ppm.

The crystallite diameter calculated from the half width at a diffraction angle of 24.0° in XRD measurement was 2.40 nm.

[Comparative Example 1]

To a 300-mL glass reactor equipped with a stirrer, a thermometer, a cooling tube, a gas flow meter, and a gas washing bottle, 225 mL of 3 N hydrochloric acid was added. Sodium tungstate dihydrate (manufactured by Wako Pure Chemical Industries, Ltd.) in an amount of 8.2 g was weighed out into a 100-mL beaker and dissolved in deionized water to obtain 25 mL of a 1 N sodium tungstate dihydrate aqueous solution. This solution was added dropwise to 225 mL of the above 3 N hydrochloric acid to prepare a gel comprising tungsten oxide dihydrate.

The gel was filtered while being washed with deionized water, and was vacuum-dried at room temperature to obtain 6.0 g of tungsten oxide dihydrate particles (yield based on sodium tungstate dihydrate: 90%).

The above-described particles in an amount of 1.3 g were weighed out into an autoclave reactor, then 80 mL of oleylamine was added, and the temperature was increased to 250°C and then maintained for 2 hours. The reaction solution was cooled to room temperature, and then settling particles were generated by causing hexane to act as a dispersion medium and methanol to act as an aggregation agent with respect to the reaction solution. Then, a purification operation of performing centrifugation at 1300 G for 3 minutes was repeated three times to remove the component that was not chemically or physically bonded to the generated particles. The supernatant was removed, and the settling particles were collected and vacuum-dried at 70°C for 1 hour to obtain 0.8 g of tungsten oxide nanoparticles. The amount of organic matter calculated from the reduced weight when heated to 600°C by TG-DTA measurement was 13% by mass. The yield based on sodium tungstate dihydrate was 63%.

The above-described nanoparticles in an amount of 0.8 g were dispersed in 2.0 g of xylene, but some particles were precipitated and a composition dispersion liquid failed to be prepared.

The crystallite diameter calculated from the half width at a diffraction angle of 24.1° in XRD measurement was 8.81 nm.

[Comparative Example 2]

In a 500-mL glass reactor equipped with a stirrer, a thermometer, a cooling tube, a gas flow meter, and a gas washing bottle, 7.2 g of tungsten hexachloride (manufactured by TANIOBIS Japan Co., Ltd.) was dissolved in a mixed solvent of 112.8 g of diethylene glycol (manufactured by Wako Pure Chemical Industries, Ltd.) and 20.2 g of deionized water in nitrogen gas. The temperature of this solution was increased to 150°C and maintained to obtain 140 g of a 5.1 wt% tungsten oxide-diethylene glycol aqueous solution.

The above-described solution in an amount of 140 g was heated to 80°C, and 5.0 g of 1-octylamine and 5.0 g of oleic acid were added to perform ligand exchange.

Settling particles were generated by causing hexane to act as a dispersion medium and ethanol to act as an aggregation agent with respect to the above-described solution. Then, a purification operation of performing centrifugation at 1300 G for 3 minutes was repeated three times to remove the component that was not chemically or physically bonded to the generated particles. The supernatant was removed, and the settling particles were collected and vacuum-dried at 70°C for 1 hour to obtain 4.3 g of tungsten oxide nanoparticles. The amount of organic matter calculated from the reduced weight when heated to 600°C by TG-DTA measurement was 6% by mass. The yield based on tungsten hexachloride was 96%.

The above-described nanoparticles in an amount of 4.3 g were dispersed in 15.0 g of xylene, but all the particles quickly settled, so that a composition dispersion liquid failed to be prepared.

The crystallite diameter calculated from the half width at a diffraction angle of 24.0° in XRD measurement was 2.15 nm.

INDUSTRIAL APPLICABILITY

The tungsten oxide composition obtained by the production method of the present invention can be used as a near-infrared absorbing material, a visible light photocatalyst material, and an electrochromic material.

**Claims**

1. A production method for a tungsten oxide composition, comprising:

   (1) a reaction step of bringing a tungsten halide and a monohydric alcohol into contact with each other and performing heating at 100°C or higher and 250°C or lower to obtain a composition (I) comprising tungsten oxide and the monohydric alcohol;
   (2) a step of mixing the composition (I) and one type or two or more types of compounds (A) selected from amines, fatty acids, thiols, and phosphines to obtain a composition (II); and
   (3) a step of removing at least a part of the monohydric alcohol and a part of the compound (A) from the composition (II) to obtain a composition (III).

2. The production method according to claim 1, wherein the heating to 100°C or higher and 250°C or lower is performed at a temperature-increasing rate of 3.0°C/min or lower.

3. The production method according to claim 1 or 2, further comprising (4) a step of mixing the composition (III) and an organic solvent (C) having a dielectric constant of 10 or lower to obtain a composition (IV).

4. The production method according to any one of claims 1 to 3, wherein the monohydric alcohol is a monohydric alcohol having 6 to 20 carbon atoms.

5. The production method according to any one of claims 1 to 4, wherein the compound (A) comprises an amine compound having 6 to 20 carbon atoms.

6. The production method according to any one of claims 1 to 5, wherein a crystallite diameter of the tungsten oxide calculated by XRD measurement is 1 to 30 nm.

7. The production method according to any one of claims 3 to 6, wherein a content amount of the tungsten oxide in the composition (IV) is 10% by mass to 50% by mass.

[Fig. 1]

## INTERNATIONAL SEARCH REPORT

| International application No. |
|---|
| **PCT/JP2021/046195** |

### A. CLASSIFICATION OF SUBJECT MATTER

*C01G 41/02*(2006.01)i
FI:   C01G41/02

According to International Patent Classification (IPC) or to both national classification and IPC

### B. FIELDS SEARCHED

Minimum documentation searched (classification system followed by classification symbols)

C01G41/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| A | CHENG, W. et al. Angewante Chemie International Edition, 20 November 2014, vol. 54, pp. 340-344, <DOI: 10.1002/anie.201408617><br>entire text, all drawings | 1-7 |
| A | KR 10-2011-0132860 A (MAPRO CO., LTD.) 09 December 2011 (2011-12-09)<br>entire text, all drawings | 1-7 |
| A | CN 111569072 A (HARBIN UNIVERSITY OF SCIENCE AND TECHNOLOGY) 25 August 2020 (2020-08-25)<br>entire text, all drawings | 1-7 |
| A | CN 109382091 A (UNIVERSITY OF SCIENCE AND TECHNOLOGY OF CHINA) 26 February 2019 (2019-02-26)<br>entire text, all drawings | 1-7 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **28 January 2022** | **08 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
|---|
| **PCT/JP2021/046195** |

| Patent document<br>cited in search report | | | Publication date<br>(day/month/year) | Patent family member(s) | Publication date<br>(day/month/year) |
|---|---|---|---|---|---|
| KR | 10-2011-0132860 | A | 09 December 2011 | (Family: none) | |
| CN | 111569072 | A | 25 August 2020 | (Family: none) | |
| CN | 109382091 | A | 26 February 2019 | (Family: none) | |

Form PCT/ISA/210 (patent family annex) (January 2015)

**EP 4 269 357 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004131346 A
- JP 2010280551 A
- JP 2020216272 A